# EUROPEAN PATENT SPECIFICATION

(11) **EP 3 074 688 B1**
(45) Date of publication and mention of the grant of the patent: **15.01.2020**
(21) Application number: 13805798.9
(22) Date of filing: 29.11.2013
(51) Int. Cl.: F16M 7/00, F25D 23/00

(54) **HEIGHT ADJUSTABLE FOOT FOR HOUSEHOLD APPLIANCE**
HÖHENVERSTELLBARER FUSS FÜR HAUSHALTSVORRICHTUNG
PIED RÉGLABLE EN HAUTEUR POUR APPAREIL DOMESTIQUE

(43) Date of publication of application: 05.10.2016
(73) Proprietor: Arçelik Anonim Sirketi, 34445 Istanbul (TR)
(72) Inventor: OZYUKSEL, Faik Emre, 34950 Istanbul (TR); CELIK, Kadir Ridvan, 34950 Istanbul (TR); KAYMAK, Mehmet Ercan, 34950 Istanbul (TR); YAZGAN, Umud, 34950 Istanbul (TR); KIRLI, Fahri, 34950 Istanbul (TR)
(86) International application number: PCT/EP2013/075081
(87) International publication number: WO 2015/078511

(56) References cited:
- EP-A1- 1 895 040
- WO-A1-2005/115199
- WO-A1-2011/080230
- DE-U1-202008 010 921
- US-A1- 2003 136 887

## Description

The present invention relates to a household appliance wherein the height is adjusted by leveling the feet supporting the body thereof.

In household appliances such as refrigerators, the feet on which the body of the appliance is carried and supported may require height adjustment. The household appliance is typically balanced by leveling the feet. Particularly, built-in household appliances may require height adjustment after being placed in a cabin.

The height adjustment of the feet can be made by rotating the foot around its axis by means of a wrench. In case of need for repair or maintenance of the appliance, or if adjusting the height of the appliance is required, for instance due to change of place, interfering with the housing by way of removing a plurality of bearings may become an unnecessarily long practice on the part of the maintenance staff.

Therefore a practically quick and effective manner of height adjustment is desirable for avoiding longer maintenance times. It is to be noted that a practically quick height arrangement allowing a relatively short duration of maintenance would involve no interference with the housing of the appliance so as to remove housing bearings and dismantle various components and/or parts. To this end, a household appliance the foot mechanisms of which is readily and instantly adjustable with a substantially accelerates repair and maintenance processes.

Therefore, the present invention ensures that leveling of a household appliance can be performed quickly and with ease such that difficult situations arising when the appliance is at a very low position and working on the same with a wrench may become troublesome due to a narrow gap between the base of the body and the floor, are avoided.

A prior art publication in the technical field of the present invention may be referred to as WO2010142010 A1 among others, the document disclosing leveling feet for household appliance, said feet having embedded castors allowing the leveling by the plastic thread to fasten the product. They have a base connected to the internal ring, which contains the thread in the external surface. An external ring moves vertically on the thread of said internal ring, delimiting the height where the base is supported. WO 2011/080 230 A1 discloses a height adjustment mechanism according to the preamble of claim 1.

The present invention provides an a household appliance comprising a height adjustment mechanism providing the height of the appliance's feet to be adjusted in a practical manner as defined by the characterizing features as defined in Claim 1.

Primary object of the present invention is hence to provide a height adjustment mechanism providing the height of the appliance's feet to be adjusted in a practical manner.

The present invention proposes a household appliance conventionally having four feet at the front and rear sides, each couple of front and rear feet being realized by means of base extension shafts. The height of the feet can be adjusted by an standard hand tool in a directly accessible manner through an adjustment end of a worm gear.

An upper end of the base extension shaft extends upwardly in the direction of a foot connection body that is fixedly attached to the appliance's body. The base extension shaft mates with said foot connection body in a threaded relationship. Said base extension shaft extends through a ring gear which is in turn driven by said worm gear, the latter being directly accessible to the users. The annular inner surface of the ring gear has a plurality of peripheral protrusions in engagement with respective grooves around said base extension shaft so as to be rotatable in engagement.

Further, a guide shell is provided to be enclosing the ring gear and the worm gear. The two gears are maintained in a tight contact relationship by said guide shell. The guide shell fits inside an opening of the foot connection body such that its rotation is prevented by two positioning brackets of the foot connection body.

Accompanying drawings are given solely for the purpose of exemplifying a household appliance comprising a height adjustment mechanism, whose advantages over prior art were outlined above and will be explained in brief hereinafter.

The drawings are not meant to delimit the scope of protection as identified in the claims nor should they be referred to alone in an effort to interpret the scope identified in said claims without recourse to the technical disclosure in the description of the present invention.

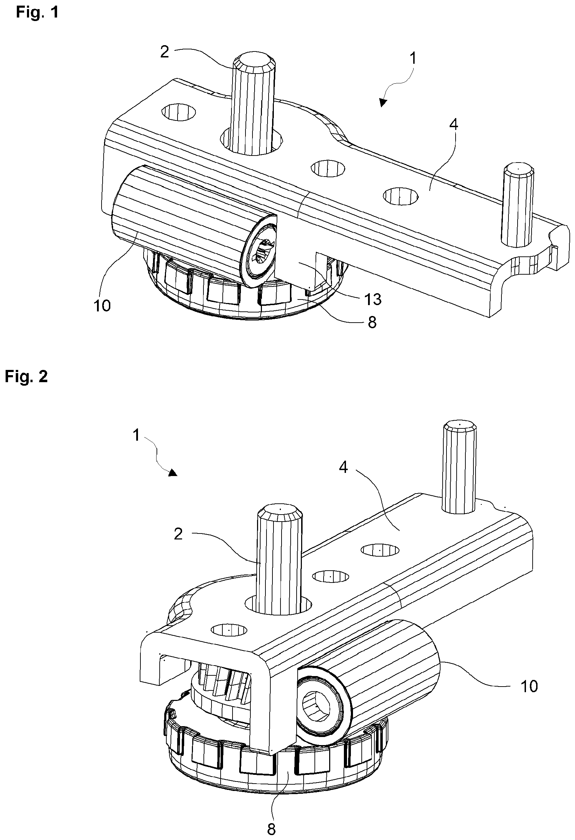

Fig. 1 demonstrates a general perspective view of the height adjustment mechanism according to the present invention.
Fig. 2 demonstrates another perspective view of the height adjustment mechanism according to the present invention.

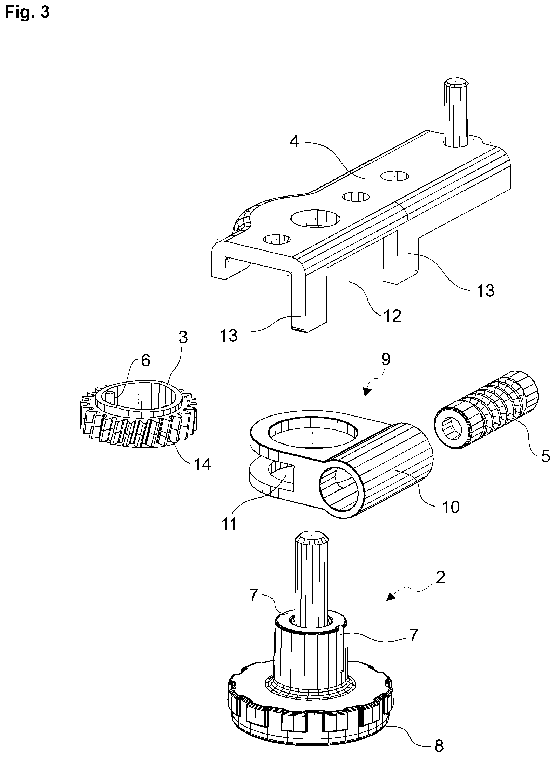

Fig. 3 demonstrates a general perspective view of the components of the height adjustment mechanism in an unassembled manner according to the present invention.

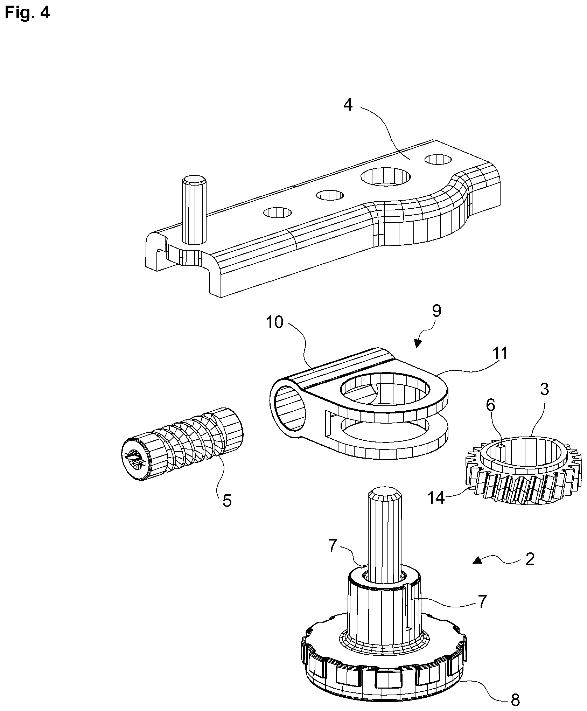

Fig. 4 demonstrates another perspective view of the components of the height adjustment mechanism in an unassembled manner according to the present invention.

The following numerals are used in this detailed description:
1. Height adjustment mechanism
2. Base extension shaft
3. Ring gear
4. Foot connection body
5. Worm gear
6. Peripheral protrusion
7. Groove
8. Base portion
9. Guide shell
10. First portion
11. Second portion
12. Opening
13. Positioning brackets
14. Teeth

The present invention relates to a household appliance and particularly a refrigerator, with a foot height adjustment mechanism (1) as explained hereinafter. The height adjustment mechanism (1) of the invention is realized in the form a threaded main shaft as a base extension shaft (2) on which a ring gear (3) that is rotatable by means of a worm gear (5) meshed therewith is provided. The ring gear (3) is mechanically couplable with said base extension shaft (2) by means of peripheral protrusions (6) thereof in engagement with respective grooves (7) around said base extension shaft (2) so as to be rotatable in engagement together and upon which said base extension shaft (2) displaces relative to a foot connection body (4). An uppermost end of the base extension shaft (2), extending upwardly in the direction of said foot connection body (4) that is fixedly attached to the appliance's body, mates with said foot connection body (4) in a threaded relationship. Said base extension shaft (2) therefore extends through the ring gear (3) which is in turn driven by the worm gear (5), the latter being directly accessible to the users. In a nutshell, the present invention proposes a household appliance having a plurality of feet having height adjustment mechanisms (1), each height adjustment mechanism (1) comprising a base portion (8) resting on the floor in connection with a base extension shaft (2), said base extension shaft (2) being displaceable relative to a foot connection body (4) so as to determine the height of the household appliance, said height adjustment mechanism (1) further comprising a ring gear (3) being rotatable by means of a worm gear (5) meshed therewith and being mechanically couplable with said base extension shaft (2) so as to be mutually rotatable in engagement.

The height adjustment mechanism (1) of the invention therefore provides height adjustment by means of the worm gear (5), rotation of which displaces said base extension shaft's (2) position up and down in respect of said foot connection body (4) and in turn adjusts the distance betwwen the floor and the plane said base extension shaft (2) is meshed with the foot connection body (4), that is the height of the appliance.

A guide shell (9) fitted inside an opening (12) of the foot connection body (4) to be held in fixed position by a pair of opposite positioning brackets (13), has a first linear portion enclosing the worm gear (5) and a second portion enclosing said ring gear (3) so as to establish a tight, i.e. mechanically interengaging contact relationship between the ring gear (3) and the worm gear (5). The rotation of the worm gear (5) driving the ring gear (3) and hence rotating the base extension shaft (2) continues as long as the guide shell (9) remains inside said opening (12) of the foot connection body (4). At the point which the guide shell (9) becomes free of the opening (12) by displacement of the base extension shaft (2) away from the foot connection body (4), the user is no longer able to adjust the height of the appliance because the guide shell (9) itself, released from the restriction of the positioning brackets (13) starts rotating and the worm gear (5) is no longer directly accessible to the user. In a nutshell, the present invention proposes a guide shell (9) that is enclosing said ring gear (3) and said worm gear (5), maintaining the two in a mutually interengaging mechanical relationship, and which is fitted inside said opening (12) of the foot connection body (4) to be held in fixed position by the positioning brackets (13) thereof.

The height adjustment mechanism's (1) base portion (8) rests on the floor in a manner integral with said base extension shaft (2) having said grooves (7) around its shaft wall. The base extension shaft (2) also has a threaded upper end (not shown) in engagement with said foot connection body (4). The base portion (8) carries and levels the household appliance on the floor. Further, the positioning brackets (13) of the foot connection body (4) extend to restrict the guide shell (9) at the two ends of its first portion (10), i.e. the linear portion enclosing the worm gear (5).

According to an embodiment of the present invention, the teeth (14) of the ring gear (3) are shaped to be inclined with respect to the surface plane defined by the two open ends of the ring gear (3). The function of the inclined design ensures that the base extension shaft's (2) position relative to the foot connection body (4), i.e. the actual position of the height adjustment mechanism (1) in vertical axis, is not altered in the event that the user tries to push and move the household appliance.

Accordingly, the present invention provides a system by which the amount of height adjustment the users can perform is limited by means of said guide shell (9) and said positioning brackets (13) so as to ensure a safe adjustment range. The invention further ensures that the positioning of the height adjustment mechanism (1) in the vertical axis remains unchanged when the household appliance is moved.

## Claims

1. A household appliance having a plurality of feet having height adjustment mechanisms (1), each height adjustment mechanism (1) comprising
- a base portion (8) resting on the floor in connection with a base extension shaft (2), said base extension shaft (2) being displaceable relative to a foot connection body (4) so as to determine the height of the household appliance,
- a ring gear (3) being rotatable by means of a worm gear (5) meshed therewith and being mechanically couplable with the base extension shaft (2) so as to be mutually rotatable in engagement,
- a guide shell (9) so as to be enclosing said ring gear (3) and said worm gear (5), and maintaining the two in a mutually interengaging mechanical relationship,
- said guide shell (9) is fitted inside an opening (12) of the foot connection body (4) to be held in fixed position by positioning brackets (13) thereof,
**characterised in that**
- a rotation of the worm gear (5) driving the ring gear (3) and hence rotating the base extension shaft (2) can continue as long as the guide shell (9) remains inside said opening (12) of the foot connection body (4), but at a point the guide shell (9) becomes free of the opening (12) by displacement of the base extension shaft (2) away from the foot connection body (4) the guide shell (9) itself starts rotating.

2. A household appliance as in Claim 1, **characterized in that** the base extension shaft (2) comprises a threaded part in cooperative engagement with the foot connection body (4) that is fixedly attached to the household appliance.

3. A household appliance as in Claim 1, **characterized in that** the ring gear (3) is mechanically couplable with the base extension shaft (2) by means of peripheral protrusions (6) thereof in engagement with respective grooves (7) around the base extension shaft (2).

4. A household appliance as in Claim 1, **characterized in that** the guide shell (9) has a first linear portion enclosing the worm gear (5) and a second portion (11) enclosing said ring gear (3) so as to establish a mechanically interengaging contact relationship between the ring gear (3) and the worm gear (5).

5. A household appliance as in Claim 1 or 2, **characterized in that** teeth (14) of the ring gear (3) are shaped to be inclined with respect to the surface plane defined by the two open ends of the ring gear (3).

## Patentansprüche

1. Ein Haushaltsgerät umfasst mehrere Füße mit Höhenverstellmechanismen (1), wobei jeder Höhenverstellmechanismus (1) umfasst,
- einen auf dem Boden aufliegenden Basisabschnitt (8), der in Verbindung mit einer Basisverlängerungswelle (2) steht, wobei die Basisverlängerungswelle (2) relativ zu einem Fußverbindungskörper (4) verschiebbar ist, damit die Höhe des Haushaltsgeräts bestimmt werden kann,
- ein Hohlrad (3), das mithilfe eines mit ihm kämmenden Schneckenrads (5) drehbar ist und mechanisch mit der Basisverlängerungswelle (2) koppelbar ist, so dass es in Eingriff gemeinsam drehbar ist,
- eine Führungsschale (9), um den Hohlrad (3) und das Schneckenrad (5) zu umschließen und beide in einer gegenseitig in Eingriff stehenden mechanischen Beziehung halten zu können,
- eine Führungsschale (9), die in eine Öffnung (12) des Fußverbindungskörpers (4) eingepasst ist, um durch Positionierungsklammern (13) in fester Position gehalten zu werden,
**gekennzeichnet ist es durch**
- eine Drehung des Schneckenrades (5), welches das Hohlrad (3) antreibt und somit die Basisverlängerungswelle (2) dreht und somit fortgesetzt werden kann, solange die Führungsschale (9) in der Öffnung (12) des Fußverbindungskörpers (4) verbleibt, allerdings ab einem Punkt, an dem die Führungsschale (9) durch das Verschieben der Basisverlängerungswelle (2) vom Fußverbindungskörper (4) weg von der Öffnung (12) frei wird, beginnt sich die Führungsschale (9) selbst zu drehen.

2. Ein Haushaltsgerät wie in Anspruch 1 aufgeführt, **ist dadurch gekennzeichnet, dass** die Basisverlängerungswelle (2) einen sogenannten Gewindeteil in zusammenwirkendem Eingriff mit dem Fußverbindungskörper (4) besitzt, der fest an dem Haushaltsgerät angebracht ist.

3. Ein Haushaltsgerät wie in Anspruch 1 aufgeführt, **ist dadurch gekennzeichnet, dass** der Hohlrad (3) mechanisch mit der Basisverlängerungswelle (2) mithilfe der Umfangsvorsprüngen (6) steht und somit, dass davon der Eingriff mit entsprechenden Nuten (7) um die Basisverlängerungswelle (2) koppelbar ist.

4. Ein Haushaltsgerät wie in Anspruch 1 aufgeführt, **ist dadurch gekennzeichnet, dass** die Führungsschale (9) einen ersten linearen Abschnitt aufweist, der das Schneckenrad (5) umschließt, und einen zweiten Abschnitt (11), der das Hohlrad (3) umschließt, um eine mechanische und ineinandergreifende Kontaktbeziehung zwischen dem Hohlrad (3) und dem Schneckenrad (5) herzustellen.

5. Ein Haushaltsgerät wie in Anspruch 1 oder 2 aufgeführt, **ist dadurch gekennzeichnet, dass** die Zähne (14) des Hohlrads (3) so geformt sind, dass sie in Bezug auf die durch die beiden offenen Enden des Hohlrads (3) bereitgestellte Oberflächenebene geneigt sind.

## Revendications

1. Un appareil électroménager présentant une pluralité de pieds avec mécanisme de réglage de la hauteur (1), chaque mécanisme de réglage de la hauteur (1) comprenant
- une portion de base (8) reposant sur le sol en liaison avec une tige d'extension de la base (2), ladite tige d'extension de la base (2) pouvant être déplacé par rapport à un corps de raccordement du pied (4) afin de déterminer la hauteur de l'appareil électroménager,
- une couronne dentée (3) pivotable à l'aide d'un engrenage à vis sans fin (5) s'engrenant avec celle-ci et pouvant être couplée mécaniquement à la tige d'extension de la base (2) de manière à être mutuellement rotatif en engagement,
- un galet de guidage (9) afin d'enserrer ladite couronne dentée (3) et ledit engrenage à vis sans fin (5), et de maintenir les deux dans une relation mécanique mutuellement interpénétrée,
- ledit galet de guidage (9) est ajusté à l'intérieur d'une ouverture (12) du corps de raccordement du pied (4) afin d'être maintenue en position fixe par positionnement des supports (13) de celui-ci,
**caractérisé en ce que**
- une rotation de l'engrenage à vis sans fin (5) bouge la couronne dentée (3) et par conséquent la rotation de la tige d'extension de la base (2) peut se poursuivre tant que le galet de guidage (9) reste à l'intérieur de ladite ouverture (12) du corps de raccordement du pied (4), mais en un point, le galet de guidage (9) se dégage de l'ouverture (12) par déplacement de la tige d'extension de la base (2) hors du corps de raccordement du pied (4) le galet de guidage (9) commence à tourner lui-même.

2. Un appareil électroménager selon la Revendication 1, **caractérisé en ce que** la tige d'extension de la base (2) comprend une partie filetée en engagement coopératif avec le corps de raccordement du pied (4) qui est attaché de manière fixe à l'appareil électroménager.

3. Un appareil électroménager selon la Revendication 1, **caractérisé en ce que** la couronne dentée (3) peut être couplée mécaniquement à la tige d'extension de la base (2) au moyen des protrusions périphériques (6) de celle-ci en prise avec des rainures respectives (7) qui sont autour de la tige d'extension de la base (2).

4. Un appareil électroménager selon la Revendication 1, **caractérisé en ce que** le galet de guidage (9) présente une première partie linéaire enfermant l'engrenage à vis sans fin (5) et une seconde partie (11) renfermant ladite couronne dentée (3) de manière à établir une relation de contact mécanique mutuellement interpénétrée entre la couronne dentée (3) et l'engrenage à vis sans fin (5).

5. Un appareil électroménager selon la Revendication 1 ou 2, **caractérisé en ce que** les dents (14) de la couronne dentée (3) sont adaptées à être inclinées par rapport au plan de surface défini par les deux extrémités ouvertes de la couronne dentée (3).
